# EUROPÄISCHE PATENTSCHRIFT

(11) **EP 1 774 923 B1**
(45) Veröffentlichungstag und Bekanntmachung des Hinweises auf die Patenterteilung: **17.08.2011**
(21) Anmeldenummer: 05022555.6
(22) Anmeldetag: 17.10.2005
(51) Int. Cl.: A61C 1/08, A61C 1/12

(54) **Medizinischer Handstückkopf**
Medical handpiece head
Tête de pièce à main médicale

(43) Veröffentlichungstag der Anmeldung: 18.04.2007
(73) Patentinhaber: W & H Dentalwerk Bürmoos GmbH, 5111 Bürmoos (AT)
(72) Erfinder: Schatz, Norbert, 5111 Bürmoos (AT); Gollackner, Alois P., 5303 Thalgau (AT)

(56) Entgegenhaltungen:
- PATENT ABSTRACTS OF JAPAN Bd. 2000, Nr. 06, 22. September 2000 (2000-09-22) -& JP 2000 087943 A (OSADA RES INST LTD), 28. März 2000 (2000-03-28)
- PATENT ABSTRACTS OF JAPAN Bd. 1997, Nr. 04, 30. April 1997 (1997-04-30) -& JP 08 322852 A (MATSUI AKIRA; MORITA MFG CO LTD; NTN CORP), 10. Dezember 1996 (1996-12-10)

## Beschreibung

Die vorliegende Erfindung betrifft einen medizinischen, insbesondere dentalen, Handstückkopf mit einer vom Handstückkopf lösbaren Verschlusskappe.

Derartige Handstückköpfe sind seit langem bekannt, siehe zum Beispiel US 5,254,004, in der die Verschlusskappe als Schraubdeckel für eine Schraubspannzange ausgeführt ist, oder AT 404.551, in der eine mehrteilige Verschlusskappe als beweglicher Druckdeckel, über den auch das Werkzeug aus der Werkzeugaufnahme gelöst werden kann, ausgebildet ist.

Die Verschlusskappen sind über ein Gewinde lösbar mit dem Handstückkopf verbunden. Die Lösbarkeit ist notwendig um bei der Montage die im inneren des Handstückkopfs angeordneten Bauteile, wie zum Beispiel die Werkzeugaufnahme, Lager, Antriebswellen, das Laufrad etc. einbauen zu können. Zusätzlich ist die Lösbarkeit auch von Vorteil, wenn während der Verwendung des Handstückkopfs Bauteile gewartet oder verschlissene Bauteile ausgetauscht werden sollen.

Nachteil der Schraubverbindung zwischen der Verschlusskappe und dem Handstückkopf ist, dass aufgrund von Vibrationen, die während des Betriebs des Handstückkopfs durch die Antriebselemente, insbesondere das Laufrad oder eine oder mehrere Wellen, erzeugt oder übertragen werden, die Gefahr besteht, dass die Verschlusskappe sich vom Handstückkopf löst. Dies ist insbesondere bei Handstückköpfen der Fall, bei denen der Anwender eigenständig Bauteile, z.B. Patronen, die die Werkzeugaufnahme und die Lager umfassen, austauschen oder Elemente warten kann. Zieht der Anwender abschließend die Verschlusskappe zu wenig fest an, so ist die Gefahr des Lösens besonders groß. Da Bauteile im Inneren des Handstückkopfs auch an der Verschlusskappe gelagert oder abgestützt sind, kann es als Folge der Lösung der Verschlusskappe zur Lockerung, Verschiebung oder Lösung dieser Bauteile kommen, so dass der Handstückkopf nicht mehr funktionsfähig ist. Passiert das Lösen der Verschlusskappe vom Handstückkopf während einer Behandlung, so kann dies im schlimmsten Fall dazu führen, dass sich das in der Werkzeugaufnahme eingespannte Werkzeug im Mundraum des Patienten löst.

Aus der Patentanmeldung JP 2000 - 87943 A ist ein dentaler Handstückkopf mit einer Kopfhülse und einer Verschlusskappe bekannt, wobei die Kopfhülse und die Verschlusskappe über eine Schraubverbindung lösbar miteinander verbindbar sind, und des Weiteren eine Verriegelungsvorrichtung in Form eines elastischen O- Rings vorgesehen ist, die ein Lösen der Verschlusskappe von der Kopfhülse verhindern soll.

Der vorliegenden Erfindung liegt daher die Aufgabe zugrunde eine Verschlusskappe und einen Handstückkopf zu schaffen, die über ein Gewinde lösbar miteinander verbunden sind und bei denen die Gefahr des ungewollten Lösens der Verschlusskappe vom Handstückkopf minimiert ist.

Diese Aufgabe wird gemäß der vorliegenden Erfindung durch einen Handstückkopf mit den Merkmalen des Anspruchs 1 gelöst. Besonders vorteilhafte Ausführungsformen sind in den Unteransprüchen angeführt.

Der erfindungsgemäße Handstückkopf umfasst eine Verriegelungsvorrichtung zwischen der Verschlusskappe und dem Handstückkopf, die durch zumindest ein Federelement, bevorzugt durch eine oder mehrere Federlaschen oder Federringe gebildet Ist. Die Verriegelungsvorrichtung verriegelt den Handstückkopf mit der Verschlusskappe, so dass eine Reibschlussverbindung und / oder eine Formschlussverbindung entsteht. Zum Lösen der Schraubverbindung zwischen dem Handstückkopf und der Verschlusskappe ist daher eine zusätzliche, diese Verriegelung überwindende Kraft notwendig. Die während der Verwendung des Handstückkopfs auftretenden Vibrationskräfte reichen dazu nicht aus, so dass die Verriegelungsvorrichtung ein Lösen der Schraubverbindung zwischen dem Handstückkopf und der Verschlusskappe verhindert.

Die Verriegelungsvorrichtung kann als Teil des Handstückkopfs oder der Verschlusskappe oder beider Elemente ausgeführt sein. Die Verriegelungsvorrichtung besteht bevorzugt zumindest teilweise aus metallischen Bauteilen.

Die Verriegelungsvorrichtung verhindert ein ungewolltes Lösen der Verschlusskappe vom Handstückkopf. Des Weiteren nützt sie sich nicht oder nur geringfügig ab und ist somit auch nach oftmaligem Öffnen und Schließen noch verwendbar.

Die Erfindung wird nachfolgend anhand mehrerer Ausführungsbeispiele und Bezug nehmend auf die beigefügten Zeichnungen erläutert:
- Figur 1: zeigt in einer perspektivischen Darstellung einen erfindungsgemäßen Handstückkopf.
- Figur 2: zeigt in einer teilweisen Schnittdarstellung ein erstes Ausführungsbeispiel des erfindungsgemäßen Handstückkopfs und der erfindungsgemäßen Verschlusskappe, die vom Handstückkopf getrennt ist.
- Figur 3: zeigt in einer teilweisen Schnittdarstellung den Handstückkopf und die Verschlusskappe aus Figur 2, wobei die Verschlusskappe mit dem Handstückkopf verbunden ist.
- Figur 4: zeigt in einer teilweisen Schnittdarstellung ein zweites Ausführungsbeispiel des erfindungsgemäßen Handstückkopfs und der erfindungsgemäßen Verschlusskappe.
- Figur 5: zeigt eine Aufsicht auf den erfindungsgemäßen Handstückkopf und auf die erfindungsgemäße Verschlusskappe entlang der Schnittebene B - B der Figur 4.
- Figur 6: zeigt in einer teilweisen Schnittdarstellung ein drittes Ausführungsbeispiel des erfindungsgemäßen Handstückkopfs und der erfindungsgemäßen Verschlusskappe.
- Figur 7: zeigt den Federring des dritten Ausführungsbeispiels gemäß Figur 6.

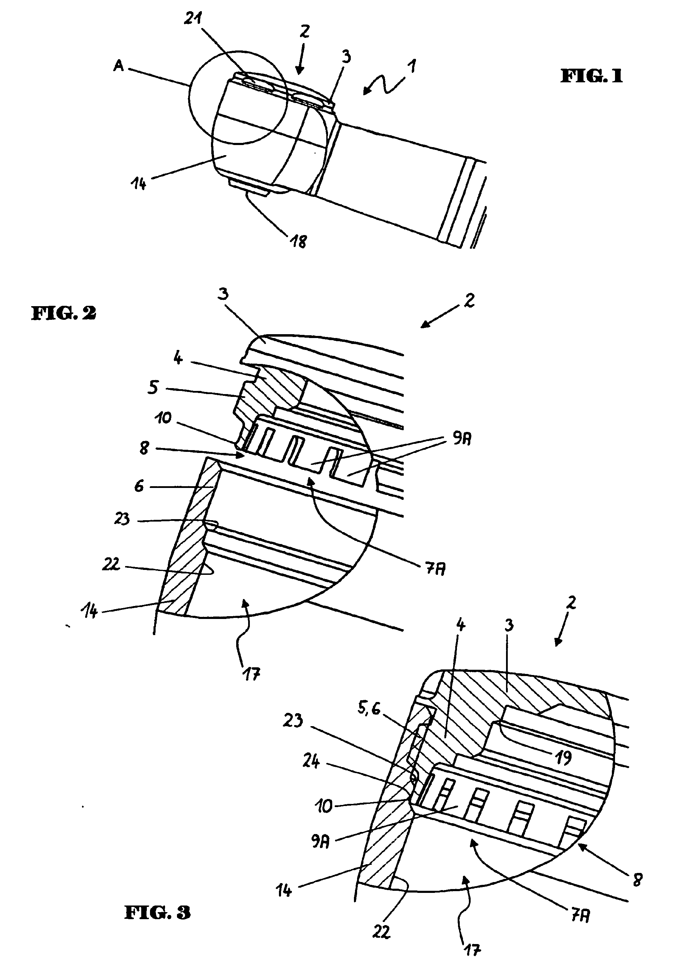

Figur 1 zeigt einen medizinischen, bevorzugt dentalen Handstückkopf 1 und eine mit dem Handstückkopf 1 lösbar verbundene Verschlusskappe 2. Der lösbar oder unlösbar mit einem medizinischen Handstück verbindbare bzw. verbundene Handstückkopf 1 umfasst eine Außen- oder Kopfhülse 14, die einen Innenraum 17 umschließt, in dem in bekannter Weise unterschiedliche Bauteile wie zum Beispiel Antriebswellen, Werkzeugaufnahmen, mit Druckluft betreibbare Laufräder, Lager zur beweglichen Lagerung der Werkzeugaufnahme oder der Antriebswellen etc. aufgenommen sind. Über eine Öffnung 8 in der Kopfhülse 14 Ist ein Behandlungsinstrument, zum Beispiel ein rotierender Bohrer oder eine hin- und her bewegbare Feile in die Werkzeugaufnahme einsteckbar. Der in Figur 1 dargestellte Handstückkopf 1 ist als Winkelstückkopf ausgebildet, bei dem die Öffnung 18 und die Werkzeugaufnahme so angeordnet sind, dass ein darin aufgenommenes Behandlungsinstrument gewinkelt von der Längsachse eines an den Handstückkopf 1 anschließenden Griffabschnitts absteht.

Verschlusskappe 2 besteht aus einem Deckelabschnitt 3, der, wenn Verschlusskappe 2 mit dem Winkelstückkopf 1 verbunden ist, im Wesentlichen über den Handstückkopf 1 hinausragt, und einem daran anschließenden, im Innenraum 17 des Handstückkopfs 1 aufnehmbaren Verbindungsabschnitt 4. Verbindungsabschnitt 4 umfasst ein Gewinde 5, das mit dem Innengewinde 6 der Kopfhülse 14 eine lösbare Schraubverbindung bildet, über die in bekannter Weise die Verschlusskappe 2 am Handstückkopf 1 befestigt wird.

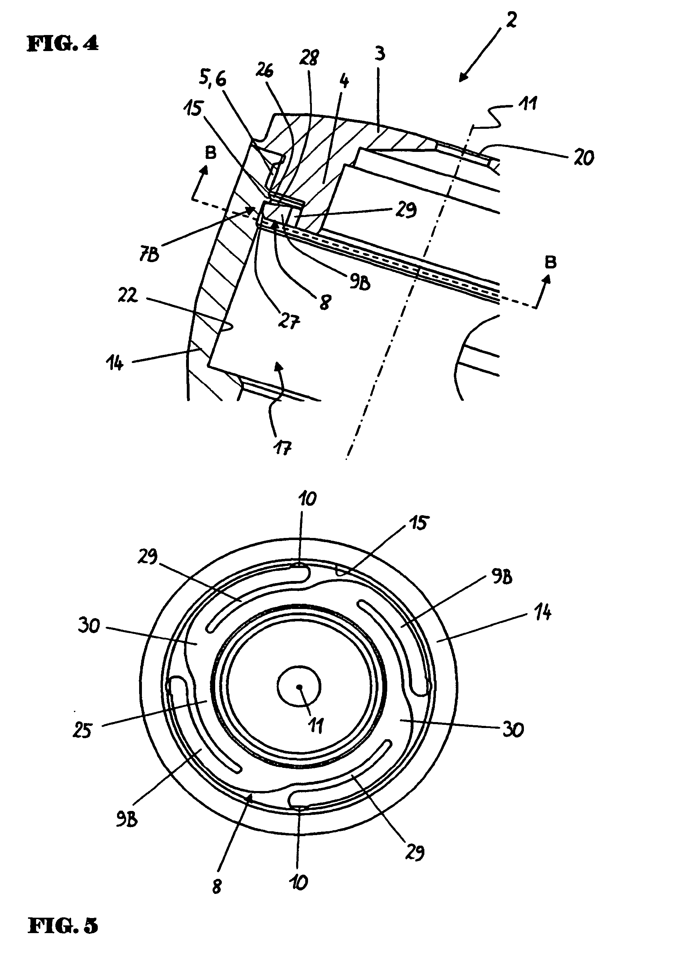

Derart mit dem Handstückkopf 1 verbunden, erfüllt Verschlusskappe 2 mehrere Aufgaben: Sie dichtet den Innenraum 17 ab und verhindert das Eindringen von Partikeln oder Beharidlungsflüssigkeit in das Innere des Handstückkopfs 1. Insbesondere Verbindungsabschnitt 4 dient auch zur zumindest teilweisen Aufnahme einer oder mehrerer der oben erwähnten Bauteile bzw. auch zur Lagerung oder Abstutzung von Bauteilen. Beispielhaft sei hierzu auf Schulter 19 verwiesen, die als Widerlager für ein Kugellager, das die Werkzeugaufnahme rotierend lagert, dient. Schließlich spielt Verschlusskappe 2 auch beim Lösen eines in der Werkzeugaufnahme aufgenommenen Werkzeugs eine Rolle. Ist die Werkzeugaufnahme als Schraubspannzange ausgeführt, so ist Verschlusskappe 2 als Schraubdeckel mit einer Bohrung 20 (siehe Figur 4) ausgebildet, durch die ein Werkzeug zum Lösen des Behandlungsinstruments in die Schraubspannzange einführbar ist. Ist die Werkzeugaufnahme mit einer kraftschlüssigen Spannzange versehen, so kann die Verschlusskappe 2 als ein- oder mehrteiliger Druckdeckel ausgeführt sein, der beweglich im Handstückkopf 1 aufgenommen ist und über ein Eingriffselement verfügt, das mit der Werkzeugaufnahme in bekannter Weise zusammenwirkt, so dass ein darin eingespanntes Behandlungsinstrument vom Anwender herausgezogen werden kann.

An der Außenseite der Verschlusskappe 2, im Bereich des Deckelabschnitts 3, sind ein oder mehrere Aufnahmen 21 in Form von Rücksprüngen vorgesehen, in die ein Werkzeug eingesetzt werden kann, mit dessen Hilfe Verschlusskappe 2 vom Handstückkopf 1 abgeschraubt werden kann. Somit sind die im Innenraum 17 aufgenommenen Bauteile des Handstückkopfs 1, insbesondere die Lager, Wellen, die Werkzeugaufnahme oder eine Patrone, die ein druckluftbetriebenes Laufrad, die Werkzeugaufnahme und die Kugellager umfasst, für Wartungen oder zum Austausch zugänglich.

Um ein ungewolltes Lösen der Verschlusskappe 2 vom Handstückkopf 1 zu verhindern, ist eine Verriegelungsvorrichtung 7A - 7C vorgesehen, die als Teil der Verschlusskappe 2 und / oder des Handstückkopfs 1 ausgeführt ist. In den Figuren 2, 3, 4 und 6 sind vorteilhafte Ausführungsbeispiele der Verriegelungsvorrichtung 7A - 7C dargestellt. Der in diesen Figuren abgebildete Teil des Handstückkopfs 1 entspricht in etwa dem in Figur 1 mit "A" bezeichneten Ausschnitt.

Die in Figur 2 dargestellte Verriegelungsvorrichtung 7A mit Federelement 8 in Form von mehreren Federlaschen 9A ist als Teil des schürzenförmig, vom Deckelabschnitt 3 der Verschlusskappe 2 abstehenden Verbindungsabschnitts 4 ausgebildet. Selbstverständlich kann auch nur eine einzige Federlasche 9A vorgesehen sein. Jede Federlasche 9A kann eine - bezogen auf die Längsachse 11 des Handstückkopfs 1 - radial federnde Bewegung zwischen einer ersten, in Figur 2 dargestellten entspannten Position und einer zweiten gespannten Position ausführen. Beim Einschrauben der Verschlusskappe 2 in den Handstückkopf 1 wandert jeder Federlasche 9A entlang der Innenseite 22 der Kopfhülse 14 bis in einen Bereich, in dem die Federlasche 9A die Innenseite 22 erührt, und durch die Innenseite 22 radial in den Innenraum 17 und damit in ihre zweite, gespannte Position verdrängt wird. Dieser Bereich kann bevorzugt durch eine in den innenraum 17 ragende Schulter 23 gebildet sein.

Durch den Kontakt zwischen der Innenseite 22 der Kopfhülse 14 und den die zweite, gespannte Position einnehmenden Federlaschen 9A entsteht eine Reibschlussverbindung (siehe Figur 3). Zum Lösen der Schraubverbindung zwischen dem Handstückkopf 1 und der Verschlusskappe 2 ist daher eine zusätzliche Kraft notwendig, um die Reibung zwischen den Federlaschen 9A und der Innenseite 22 der Kopfhülse 14 zu überwinden. Die während der Verwendung des Handstückkopfs 1 auftretenden Vibrationskräfte reichen dazu nicht aus, so dass die Reibschlussverbindung das Lösen der Schraubverbindung 5, 6 zwischen dem Handstückkopf 1 und der Verschlusskappe 2 verhindert.

Zur Verbesserung der Fleibschlussverbindung besteht weiters die Möglichkeit, eine oder mehrere Federlaschen 9A mit einer Nase 10 zu versehen oder die die Innenseite 22 kontaktierende Oberfläche der Federlasche 9A und / oder Nase 10 aufzurauen oder mit einer reibungsverstärkenden Beschichtung zu versehen. Des Weiteren kann an der Innenseite 22 des Handstückkopfs 1 ein Einstich 24, bevorzugt in Form einer Ringnut, vorgesehen sein, in den zumindest ein Teil der Federlasche 9A und / oder Nase 10 einrastet, so dass eine kombinierte Reibschluss- und Formschlussverbindung oder auch ausschließlich eine Formschlussverbindung entsteht.

Der Vorteil der Verriegelungsvorrichtung 7A liegt insbesondere in der einfachen und kostengünstigen Herstellungsweise, bei der die Federlaschen 9A durch zerspanende Bearbeitung, Insbesondere durch Fräsen oder Erodieren, aus dem Verbindungsabschnitt 4 herausgearbeitet werden. Da die gesamte Verschlusskappe 2 einschließlich den Federlaschen 9A aus einem Teil besteht, sind auch keine weiteren Montageschritte notwendig.

In den Figuren 4 und 5 ist eine alternative Ausführungsform einer Verriegelungsvorrichtung mit Laschen dargestellt, wobei Figur 5 eine Aufsicht auf die Kopfhülse 14 und die Verschlusskappe 2 entlang der Schnittebene B-B der Figur 4 zeigt. Verriegelungsvorrichtung 7B umfasst ein Federelement 8 mit einer oder mehreren Federlaschen 9B, die bevorzugt wiederum mit jeweils einer Nase 10 versehen sind. Während die Federlaschen 9A der Figuren 2 und 3 im Wesentlichen parallel zur Längsachse 11 des Handstückkopfs 1 verlaufen, sind die Federlaschen 9B in einer Ebene (die in etwa parallel zur Schnittebene B - B in Figur 4 verläuft) angeordnet, die im Wesentlichen rechtwinkelig zur Längsachse 11 des Handstückkopfs 1 verläuft (siehe insbesondere Figur 5).

Der Vorteil der Verriegelungsvorrichtung 7B liegt insbesondere Im geringeren axialen Platzverbrauch der Federlaschen 98. Dies ist von hoher Bedeutung, da die Höhe (axiale Ausdehnung) insbesondere von dentalen Handstückköpfen möglichst gering sein soll, um dem Anwender im Mundraum des Patienten eine gute Sichtbarkeit der Behandlungsstelle und eine möglichst unkomplizierte Handhabung des Handstückkopfs in schwer zugänglichen Bereichen der Mundhöhle zu ermöglichen.

Bevorzugt sind die Federlaschen 9B wiederum als Teil der Verschlusskappe 2 ausgebildet, sie können jedoch alternativ mit ihrer Basis 25 als separates Bauteil gefertigt und mit der Verschlusskappe 2 verbunden, zum Beispiel verpresst, werden. Jede Federlasche 9B ist über einen Schlitz 29 von der Basis 25 getrennt und über einen Steg 30 mit der Basis 25 verbunden, so dass jede Federlasche 9B wiederum eine radial federnde Bewegung zwischen einer ersten entspannten und einer zweiten gespannten Position ausführen kann. Die Funktionsweise der Verriegelungsvorrichtung 7B und der Federlaschen 9B entspricht der für die Verriegelungsvorrichtung 7A beschriebenen Funktionsweise, so dass von einer Wiederholung abgesehen wird. Selbstverständlich können auch die Federlaschen 9B oder ihre Nasen 10 zur Erhöhung der Reibung aufgeraut oder mit einer reibungsverstärkenden Beschichtung versehen sein.

Aus Figur 4 ist des Weiteren erkennbar, dass die Innenseite der Kopfhülse 14 mit einer keilförmigen Schulter 15 versehen ist, die bevorzugt ringförmig entlang der gesamten Innenseite 22 verläuft. Beim Verschrauben von Handstückkopf 1 mit Verschlusskappe 2 werden die Federlaschen 9B über die Schulter 15 verschoben, wobei sie gleichzeitig auch die Radialbewegung durchlaufen, bis sie Schulter 15 hintergreifen, wodurch es zu einer Verstärkung der Reibschlussverbindung und damit zu einer weiteren Erschwerung des ungewollten Lösens der Verschlusskappe 2 vom Handstückkopf 1 kommt. Bevorzugt weist Schulter 15 an ihrer der Verschlusskappe 2 zugewandten Seite eine schiefe Ebene 26 und / oder die Federlaschen 9B jeweils eine erste schiefe Ebene 27 auf, so dass das Verschieben der Federlaschen 9B über die Schulter 15 beim Verschrauben des Handstückkopfs 1 mit der Verschlusskappe 2 erleichtert wird. Die Federlaschen 9B können zusätzlich jeweils eine zweite schiefe Ebene 28 aufweisen, die an der der ersten schiefen Ebene 27 gegenüberliegenden Seite der Federlaschen 9B angeordnet ist und die das gewollte, zum Beispiel vom Anwender durchgeführte Lösen der Verschlusskappe 2 vom Handstückkopf 1 erleichtert.

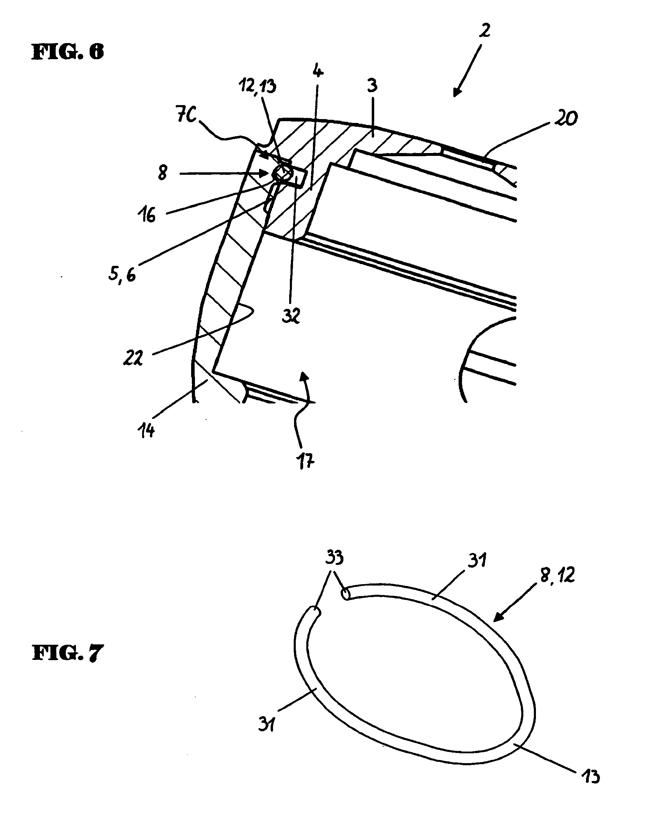

In Figur 6 ist eine Verriegelungsvorrichtung 7C dargestellt, deren Federelement 8 anstelle von Federlaschen einen Federring 12 umfasst, der zumindest teilweise in einem Einstich 32 der Verschlusskappe 2 aufgenommen ist. Der Vorteil dieser Ausführungsform liegt einerseits wiederum in der geringen axialen Bauhöhe, die der Federring 12 benötigt und andererseits in der noch weiter vereinfachten Herstellung, bei der das Herausarbeiten der Federlaschen entfällt.

Der Durchmesser des Federrings 12 ist derart bemessen, dass durch das Verschrauben der Verschlusskappe 2 mit dem Handstückkopf 1 der Federring 12 die Innenseite 22 der Kopfhülse 14 kontaktiert, wodurch wiederum eine Reibschlussverbindung aufgebaut wird.

Bevorzugt ist an der Innenseite 22 der Kopfhülse 14 ein Einstich 16, zum Beispiel eine Ringnut, vorgesehen, so dass der Federring 12 in den Einstich 16 einrastet und eine kombinierte Reibschluss- und Formschlussverbindung oder auch ausschließlich eine Formschlussverbindung entsteht.

Der Federring 12 kann kreisförmig ausgebildet sein, wie insbesondere aus Figur 7 zu erkennen ist, ist er jedoch bevorzugt an einer Stelle verformt, so dass Federring 12 aus einer Nase 13 mit einem ersten Radius und zwei Schenkeln 31 mit einem zweiten Radius besteht. Nase 13 ragt beim Verschrauben des Handstückkopfs 1 und der Verschlusskappe 2 weiter aus Einstich 32 heraus als die beiden Schenkel 31 und garantiert somit ein sicheres und vollständiges Eingreifen in Einstich 16. Ragt Nase 13 weiter vor als Einstich 32 tief Ist, so wird der gesamte Federring 12 während des Verschraubens verschoben oder verformt, so dass insbesondere die beiden freien Enden 33 der Schenkel 31 aus dem Einstich 32 heraus-und in Einstich 16 hineinragen, so dass Federring 12 Handstückkopf 1 an mehreren Stellen kontaktiert und die Verriegelung zwischen dem Handstückkopf 1 und der Verschlusskappe 2 verstärkt wird.

Die Erfindung ist nicht auf die beschriebenen Ausführungsbeispiele beschränkt, sondern umfaßt alle Ausführungsmöglichkeiten, die das prinzipielle, sinngemäße Funktionsprinzip der Erfindung nicht verändern. Insbesondere ist ein Austausch der Teile der Verriegelungsvorrichtung 7A - 7C zwischen dem Handstückkopf 1 und der Verschlusskappe 2 möglich, so dass zum Beispiel das Federelement 8 am Handstückkopf 1 und Schulter 15 oder Einstich 16 an der Verschlusskappe 2 angeordnet sind.

## Patentansprüche

1. Medizinischer, insbesondere dentaler, Handstückkopf (1) mit einer Kopfhülse (14) und einer Verschlusskappe (2), wobei die Kopfhülse (14) und die Verschlusskappe (2) über eine Schraubverbindung (5, 6) lösbar miteinander verbindbar sind, und wobei der Handstückkopf (1) eine Verriegelungsvorrichtung (7A - 7C) aufweist, die durch zumindest ein Federelement (8) gebildet ist, zur Verriegelung der Verschlusskappe (2) mit der Kopfhülse (14), wobei die Verriegelungsvorrichtung (7A - 7C) zur Verhinderung einer ungewollten, insbesondere durch Vibrationen während des Betriebs des Handstückkopfs (1) verursachten, Lösung der Verschraubung (5, 6) zwischen der Verschlusskappe (2) und der Kopfhülse (14) ausgebildet ist, **dadurch gekennzeichnet, dass**
das zumindest eine Federelement (8) zumindest ein freies Ende (33) aufweist und dass das zumindest ein freie Ende (33) auch vorhanden ist, wenn die Kopfhülse (14) und die Verschlusskappe (2) voneinander getrennt sind, so dass das zumindest eine Federelement (8) die Innenseite der Kopfhülse (14) kontaktiert, wenn die Verschlusskappe (2) mit der Kopfhülse (14) verschraubt wird, so dass eine Reibschlussverbindung entsteht.

2. Handstückkopf (1) nach Anspruch 1, **dadurch gekennzeichnet, dass** das zumindest eine Federelement (8) zwischen einer ersten entspannten Position und einer zweiten gespannten Position radial bewegbar ist.

3. Handstückkopf (1) nach Anspruch 1 oder 2, **dadurch gekennzeichnet, dass** das zumindest eine Federelement (8) als Federlasche (9A, 9B) ausgebildet ist, die bevorzugt mit einer Nase (10) versehen ist.

4. Handstückkopf (1) nach Anspruch 3, **dadurch gekennzeichnet, dass** die Federlasche (9A, 9B) in einer Ebene angeordnet ist, die im Wesentlichen rechtwinkelig zur Längsachse (11) des Handstückkopfs (1) verläuft.

5. Handstückkopf (1) nach Anspruch 1 oder 2, **dadurch gekennzeichnet, dass** das zumindest eine Federelement (8) als Federring (12) ausgebildet ist.

6. Handstückkopf (1) nach Anspruch 5, **dadurch gekennzeichnet, dass** der Federring (12) zumindest teilweise in einem Einstich (32) aufgenommen ist.

7. Handstückkopf (1) nach Anspruch 5 oder 6, **dadurch gekennzeichnet, dass** der Federring (12) zwei Schenkel (31) und eine zwischen den Schenkeln (31) angeordnete Nase (13) umfasst.

8. Handstückkopf (1) nach Anspruch 7, **dadurch gekennzeichnet, dass** die Nase (13) einen ersten Radius und die zwei Schenkel (31) einen zweiten Radius aufweisen, so dass die Nase (13) weiter aus dem Einstich (32) herausragt als die beiden Schenkel (31).

9. Handstückkopf (1) nach einem der vorhergehenden Ansprüche, **dadurch gekennzeichnet, dass**
die Verriegelungsvorrichtung (7A - 7C) des Weiteren zumindest eine Schulter (15, 23), und / oder einen Einstich (16) zur Aufnahme zumindest eines Teils des zumindest einen Federelements (8) umfasst.

10. Handstückkopf (1) nach Anspruch 9, **dadurch gekennzeichnet, dass** die Schulter (15, 23) und / oder der Einstich (16) als Teil der Kopfhülse (14) des Handstückkopfs (1) ausgebildet sind.

11. Handstückkopf (1) nach einem der vorhergehenden Ansprüche, **dadurch gekennzeichnet, dass**
das zumindest eine Federelement (8) als Teil der Verschlusskappe (2) ausgebildet ist.

12. Handstückkopf (1) nach Anspruch 11, **dadurch gekennzeichnet, dass** die Verschlusskappe (2) einen im Innenraum (17) des Handstückkopfs (1) aufnehmbaren Verbindungsabschnitt (4) aufweist, von dem das zumindest eine Federelement (8) absteht.

13. Handstückkopf (1) nach einem der vorhergehenden Ansprüche, **dadurch gekennzeichnet, dass**
die Verriegelungsvorrichtung (7A - 7C) zumindest teilweise metallische Bauteile aufweist.

## Claims

1. A medical, in particular a dental handpiece head (1) having a head sleeve (14) and a closing cap (2), wherein the head sleeve (14) and the closing cap (2) can be detachably joined together via a screw connection (5, 6), and wherein the handpiece head (1) comprises a locking device (7A - 7C), which is formed by at least one spring element (8), for locking the closing cap (2) with the head sleeve (14), wherein the locking device (7A - 7C) is configured to prevent unintentional release, caused by vibrations during operation of the handpiece head (1) in particular, of the screw connection (5, 6) between the locking cap (2) and the head sleeve (14), **characterized in that**
the at least one spring element (8) comprises at least one free end (33) and that the at least one free end (33) is also present, when the head sleeve (14) and the closing cap (2) are separated from each other, so that the at least one spring element (8) contacts the inner surface of the head sleeve (14), when the closing cap (2) is screwed together with the head sleeve (14), so that a friction grip is formed.

2. The handpiece head (1) according to Claim 1, **characterized in that** the at least one spring element (8) can be moved radially between a first released position and a second tightened position.

3. The handpiece head (1) according to Claim 1 or 2, **characterized in that** the at least one spring element (8) is designed as a spring shackle (9A, 9B) which is preferably provided with a nose (10).

4. The handpiece head (1) according to Claim 3, **characterized in that** the spring shackle (9A, 9B) is arranged in a plane which runs substantially at a right angle to the longitudinal axis (11) of the handpiece head (1).

5. The handpiece head (1) according to Claim 1 or 2, **characterized in that** the at least one spring element (8) is designed as a spring ring (12).

6. The handpiece head (1) according to Claim 5, **characterized in that** the spring ring (12) is held at least partially in a recess (32).

7. The handpiece head (1) according to Claim 5 or 6, **characterized in that** the spring ring (12) comprises two legs (31) and a nose (13) which is arranged between the legs (31).

8. The handpiece head (1) according to Claim 7, **characterized in that** the nose (13) comprises a first radius and the two legs (31) comprise a second radius, so that the nose (13) protrudes further out of the recess (32) than the two legs (31).

9. The handpiece head (1) according to any one of the preceding Claims, **characterized in that**
the locking device (7A - 7C) additionally comprises at least one shoulder (15, 23) and/or one recess (16) to accommodate at least a part of the at least one spring element (8).

10. The handpiece head (1) according to Claim 9, **characterized in that** the shoulder (15, 23) and/or the recess (16) are designed as part of the head sleeve (14) of the handpiece head (1).

11. The handpiece head (1) according to any one of the preceding Claims, **characterized in that**
the at least one spring element (8) is designed as part of the closing cap (2).

12. The handpiece head (1) according to Claim 11, **characterized in that** the closing cap (2) comprises a connecting section (4) which can be accommodated in the interior (17) of the handpiece head (1) and from which the at least one spring element (8) protrudes.

13. The handpiece head (1) according to any one of the preceding Claims, **characterized in that**
the locking device (7A - 7C) at least partially comprises metallic elements.

## Revendications

1. Tête de pièce à main (1) médicale, en particulier dentaire, comprenant une douille de tête (14) et un bouchon de fermeture (2), sachant que la douille de tête (14) et le bouchon de fermeture (2) peuvent être reliés de manière séparable entre eux par un assemblage vissé (5, 6) et sachant que la tête de pièce à main (1) présente un dispositif de verrouillage (7A - 7C) qui est formé par au moins un élément de ressort (8), pour verrouiller le bouchon de fermeture (2) avec la douille de tête (14), sachant que le dispositif de verrouillage (7A - 7C), pour éviter une séparation non souhaitée de l'assemblage vissé (5, 6), en particulier provoquée par des vibrations durant le fonctionnement de la tête de pièce à main (1), est formé entre le bouchon de fermeture (2) et la douille de tête (14), **caractérisé en ce que**
l'au moins un élément de ressort (8) présente au moins une extrémité libre (33) et **en ce qu'**au moins l'une extrémité libre (33) est également disponible, lorsque la douille de tête (14) et le bouchon de fermeture (2) sont séparés l'un de l'autre, de façon à ce que l'au moins un élément de ressort (8) soit en contact avec la face intérieure de la douille de tête (14) lorsque le bouchon de fermeture (2) est vissé avec la douille de tête (14), de façon à ce qu'une liaison par frottement se produise.

2. Tête de pièce à main (1) selon la revendication 1, **caractérisée en ce que** l'au moins un élément de ressort (8) est déplaçable radialement entre une première position détendue et une deuxième position tendue.

3. Tête de pièce à main (1) selon la revendication 1 ou 2, **caractérisée en ce que** l'au moins un élément de ressort (8) est formé comme une languette élastique (9A, 9B) munie de préférence d'un ergot (10).

4. Tête de pièce à main (1) selon la revendication 3, **caractérisée en ce que** la languette élastique (9A, 9B) est disposée dans un plan qui s'étend sensiblement à angle droit par rapport à l'axe longitudinal (11) de la tête de pièce à main (1).

5. Tête de pièce à main (1) selon la revendication 1 ou 2, **caractérisée en ce que** l'au moins un élément de ressort (8) est formé comme un anneau élastique (12).

6. Tête de pièce à main (1) selon la revendication 5, **caractérisée en ce que** l'anneau élastique (12) est reçu au moins partiellement dans une encoche (32).

7. Tête de pièce à main (1) selon la revendication 5 ou 6, **caractérisée en ce que** l'anneau élastique (12) comprend deux branches (31) et un ergot (13) placé entre les branches (31).

8. Tête de pièce à main (1) selon la revendication 7, **caractérisée en ce que** l'ergot (13) présente un premier rayon et les deux branches (31) présentent un deuxième rayon, de façon à ce que l'ergot (13) fasse saillie plus loin hors de l'encoche (32) que les deux branches (31).

9. Tête de pièce à main (1) selon l'une des revendications précédentes, **caractérisée en ce que**
le dispositif de verrouillage (7A - 7C) comprend en outre au moins un épaulement (15, 23), et / ou une encoche (16) prévu(e)(s) pour recevoir au moins une partie de l'au moins un élément de ressort (8).

10. Tête de pièce à main (1) selon la revendication 9, **caractérisée en ce que** l'épaulement (15, 23) et / ou l'encoche (16) fait/font partie de la douille de tête (14) de la tête de pièce à main (1).

11. Tête de pièce à main (1) selon l'une des revendications précédentes, **caractérisée en ce que**
l'au moins un élément de ressort (8) fait partie du bouchon de fermeture (2).

12. Tête de pièce à main (1) selon la revendication 11, **caractérisée en ce que** le bouchon de fermeture (2) présente une section de liaison (4) pouvant être reçue dans l'espace intérieur (17) de la tête de pièce à main (1), de laquelle l'au moins un élément de ressort (8) est distant.

13. Tête de pièce à main (1) selon l'une des revendications précédentes, **caractérisée en ce que**
le dispositif de verrouillage (7A - 7C) présente au moins partiellement des pièces métalliques.
